# EUROPEAN PATENT SPECIFICATION

(11) **EP 3 800 044 B1**
(45) Date of publication and mention of the grant of the patent: **23.11.2022**
(21) Application number: 18940443.7
(22) Date of filing: 28.12.2018
(51) Int. Cl.: B32B 7/06, B32B 33/00, B32B 27/08

(54) **PROTECTIVE FILM AND METHOD FOR PEELING RELEASE LAYER THEREOF**
SCHUTZFILM UND VERFAHREN ZUM ABLÖSEN DER ABLÖSESCHICHT DAVON
FILM PROTECTEUR ET PROCÉDÉ DE PELAGE D'UNE COUCHE DE SÉPARATION DE CELUI-CI

(30) Priority: 14.11.2018 CN 201811363449
(43) Date of publication of application: 07.04.2021
(73) Proprietor: Jiangmen Iguarder Electronic Co., Ltd., Jiangmen, Guangdong 529060 (CN)
(72) Inventor: CHEN, Haiying, Jiangmen, Guangdong 529060 (CN)
(74) Representative: Juncosa Miró, Jaime
(86) International application number: PCT/CN2018/124668
(87) International publication number: WO 2020/098108

(56) References cited:
- WO-A1-2015/038883
- CN-A- 105 416 661
- CN-A- 105 829 070
- CN-U- 202 987 565
- CN-U- 204 250 612
- CN-U- 204 750 661
- US-A1- 2013 048 203
- US-A1- 2016 288 470
- US-A1- 2018 117 892

## Description

### Technical field

The present invention relates to the field of film pasting technologies for electronic devices, and more particularly, to a protective film and a method for peeling a release layer thereof.

### Background

The use of electronic devices is becoming more and more popular in modern society, and this kind of intelligent electronic devices are usually provided with a screen, which generally has a touch function. Keys on the screen are touched to communicate or menus are touched to get information through a conductive characteristic of fingers. In order to prevent a screen surface from being often touched or damaged by external friction or collision, it is necessary to paste a protective film on the screen.

A current protective film is generally a hard protective film with a high strength, such as a tempered glass film, which is hard in texture and has a strong adhesion. The protective film generally comprises a protective film sheet adhered with glue on one face for pasting on the screen surface, a release layer attached to an adhesive end of the protective film sheet, and a protective layer attached to the other end of the protective film sheet. The protective film with this structure cannot be positioned, and the release layer of the protective film is not easy to peel, so that the quality of film pasting cannot be guaranteed. Therefore, the current protective film is not suitable for matching with a film pasting machine.

Document US2018/117892A1 relates to a device for sticking a film on a display screen of a mobile device, the device including: a film holder for sticking a film main body on the display screen, the film holder having a protruding engagement piece which is inserted into and fixed to a connector on the side of the mobile device which serves as an engagement partner and a positioning means for the film main body, the film holder has at least two positioning projections and the film main body has the same number of positioning holes which are commensurate with the positioning projections.

Document WO2015/038883A1 relates to an applicator provided for applying protective films to electronic device displays. The applicator includes a base, a screen protector, and a squeegee. The base includes a pocket for receiving an electronic device. The screen protector is affixed to the base so as to overlie an electronic device. The screen protector preferably includes three layers including a protective film, cap sheet, and back liner. The squeegee is provided for removing the back liner and for simultaneously affixing the protective film to an electronic device.

Document US2016/288470A1 relates to an overlay applicator that includes an overlay layer. The overlay layer includes a top side and a bottom side. The bottom side includes an adhesive configured to adhere the overlay layer to a screen of an electronic device. The overlay applicator also includes an adhesive release liner. The adhesive release liner includes a top side and a bottom side. The top side of the adhesive release liner is removably attached to the bottom side of the overlay layer. The adhesive release liner is configured to be removed from the bottom side of the overlay layer to expose the adhesive of the bottom side of the overlay layer. The overlay applicator additionally includes a pull tab layer. The pull tab layer is configured to remove the adhesive release liner from the bottom side of the overlay layer to expose the adhesive and to adhere the overlay layer to the screen.

Document CN105829070A relates to an overlay applicator that can include an overlay with a top side and a bottom side. The bottom side can include an adhesive agent configured to adhere to a screen of an electronic device. The overlay applicator can include an adhesive release liner. The adhesive release liner can include a top side and a bottom side. The top side of the adhesive release liner can be removably attached to the bottom side of the overlay. The adhesive release liner can be configured to protect the adhesive agent at the bottom side of the overlay from contaminants. The overlay applicator can include a protective film removably attached to the top side of the overlay. The overlay applicator can include an alignment tab. The alignment tab can include an alignment mechanism. The overlay applicator further can include a pull tab. The pull can include a wiper.

Document CN105416661A relates to a screen protection film attaching device and method. The screen protection film attaching device comprises a base, a protection film, a first guide shifting piece and a second guide shifting piece. The top surface of the base is provided with a containing groove and a temporary fixing part. The protection film comprises a release layer, a body layer and a protective layer, wherein the release layer, the body layer and the protective layer are mutually stacked together. The first guide shifting piece and the second guide shifting piece are provided with a first fixing part and a second fixing part respectively. The first fixing part is used for detachably fixing the end, provided with the protective layer, of the protection film. The second fixing part is used for being fixed to the end, provided with the release layer, of the protection film. In this way, a user can arrange the protection film in the corresponding position of an electronic device conveniently and accurately with the assistance of the base, the first guide shifting piece and the second guide shifting piece, and the work of attaching the protection film accurately can be completed easily at a low cost.

Document CN204750661U discloses a protection film pastes screen positioner, which comprises a housing, the casing is including being platelike bottom plate, the periphery of bottom plate extends the spacing curb plate that has the perpendicular to bottom plate towards the bottom plate with one side, the bottom plate with spacing curb plate encloses into one and holds the first recess that the cell -phone was used, the middle part of bottom plate is equipped with pressing hole, the protection film, the protection film includes the tempering membrane, is located tempering membrane both sides from the type membrane, the protection film detachable fix on the bottom plate.

Document CN204250612U relates to a simple protective film structure for coating a tool, and belongs to the technical field of electronic product manufacture. The utility model especially refers to a protective film structure for coating a display panel module group of a cell phone and other mobile device. The protective film superposing structure comprises a first detachable layer, a protective film layer and a second detachable layer, wherein positioning holes are arranged in the long edge side of the protective film, and accurately match with the positioning pillars of simple tool positioning pillars. To pasting the protective film, a panel module group is placed in a positioning groove of a plate module group, the protective film positioning holes sleeve the simple tool positioning pillars, and the second detachable layer is torn off to complete aligning and film pasting.

Document CN202987565U discloses a laminator of protective films of a bar phone and a tablet personal computer. The laminator comprises an engine base, a movable depression bar assembling unit and composite film paper, a collection groove, a composite film paper groove, a phone and tablet personal computer groove are formed in the engine base, and walking rail grooves are formed in the left side and the right side of the engine base. The movable depression bar assembling unit comprises a circular pressing wheel, a metal or plastic shaft and walking rail rollers, wherein the metal or plastic shaft penetrates through the circular pressing wheel in a concentric mode, and the walking rail rollers are installed at the lower shaft end of a movable pressing wheel support. The composite film paper comprises a fixing piece, a separating piece, a protective film, a connecting film and a supporting film, wherein the fixing piece, the separating piece, the protective film and the supporting film are connected in sequence, the protective film comprises a main film and an auxiliary film, and the separating piece is adhered below the auxiliary film.

Document US2013/048203A1 relates to a film assembly that includes a protective film, first and second removable opposing tabs, an adhesive, and a split release liner. The first and second opposing tabs may be configured to facilitate the alignment of the protective film with respect to a surface of a portable electronic device.

### Summary

Aiming at the problems in the existing technology, the present invention aims to provide a protective film, which is matched with a film pasting machine and has a high precision of film pasting and good effects; and the present invention further aims to provide a method for peeling a release layer of a protective film, thereby making the peeling smooth and highly efficient. mechanism is arranged on the protective layer to align the protective film sheet with a screen of an electronic device.

As a further improvement of the above technical scheme, the lead tab includes a first layer and a second layer, one end of the release layer is sandwiched between the first layer and the second layer, and one end of the lead tab matched with the release layer is offset from a boundary of the protective film sheet.

As a further improvement of the above technical scheme, an aligning mechanism is arranged on the lead tab.

As a further improvement of the above technical scheme, the aligning mechanism is arranged at one end of the lead tab away from the release layer.

As a further improvement of the above technical scheme, the positioning mechanism includes a plurality of positioning holes arranged at intervals along a periphery of the protective film sheet for positioning the protective film.

As a further improvement of the above technical scheme, the plurality of positioning holes are asymmetrically arranged with each other.

As a further improvement of the above technical scheme, the plurality of positioning holes comprise at least two diameters and are arranged in an array with each other.

A method for peeling a release layer of a protective film includes:
providing a positioning device, the positioning device being matched with a positioning mechanism to position the protective film;
providing a peeling device, the peeling device peeling a lead tab from the protective film; and the peeling device moving relative to the protective film to peel the release layer from the protective film sheet.

As a further improvement of the above technical scheme, the peeling device moving relative to the protective film to peel the release layer from the protective film sheet includes: the peeling device moving relative to one end of the protective film sheet away from the lead tab and pressing down the release layer to peel the release layer from the protective film sheet.

As a further improvement of the above technical scheme, the peeling device moving relative to the protective film to peel the release layer from the protective film sheet includes: the peeling device moving relative to one end of the protective film sheet away from the lead tab and rolling up the release layer to peel the release layer from the protective film sheet.

The present invention has the beneficial effects that: compared with the existing technology, the protective film provided in the present invention is provided with the lead tab connected to the end part of the release layer, thereby facilitating peeling the release layer from the protective film, implementing smooth peeling, and increasing an efficiency. Moreover, the positioning mechanism is arranged on the protective layer of the protective film to align the protective film sheet with the screen of the electronic device. The protective film is used in tandem with the film pasting machine, which provides highly precise film pasting and great film pasting effects. According to the method for peeling the release layer of the protective film provided in the present invention, the positioning device is employed to position the protective film, the peeling device peels the lead tab from the protective film and then moves relative to the protective film to peel the release layer from the protective film sheet, and a process of peeling the release layer is smoother and more efficient, thereby further increasing an efficiency and the quality of film pasting.

### Brief description of the Drawings

FIG. 1 is a structure diagram of a protective film according to an embodiment of the present invention.
FIG. 2 is a top view of the embodiment of FIG. 1.
FIG. 3 is an exploded view of the embodiment of FIG. 1.
FIG. 4 is a flow chart of a method for peeling a release layer of a protective film according to an embodiment of the present invention.
FIG. 5 is a schematic diagram of a state in which the protective film is positioned in an implementation manner according to an embodiment of the present invention.
FIG. 6 is a schematic diagram of a state in which a peeling device presses down a lead tab in an implementation manner according to an embodiment of the present invention.
FIG. 7 is a front view of the embodiment of FIG. 6.
FIG. 8 is a schematic diagram of a state in which the peeling device moves relative to one end of a protective film sheet away from the lead tab and presses down the release layer in an implementation manner according to an embodiment of the present invention.
FIG. 9 is a front view of the embodiment of FIG. 8.
FIG. 10 is a schematic diagram of a state in which the release layer is completely peeled from the protective film sheet in an implementation manner according to an embodiment of the present invention.
FIG. 11 is a front view of the embodiment of FIG. 10.
FIG. 12 is a schematic diagram of a state of an aligning machine in an implementation manner according to an embodiment of the present invention.
FIG. 13 is a flow chart of a method for peeling a release layer of a protective film according to another embodiment of the present invention.
FIG. 14 is a schematic diagram of a state in which the peeling device rolls up the lead tab in another implementation manner according to an embodiment of the present invention.
FIG. 15 is a front view of the embodiment of FIG. 14.
FIG. 16 is a schematic diagram of a state in which the peeling device moves relative to one end of the protective film sheet away from the lead tab and rolls up the release layer in another implementation manner according to an embodiment of the present invention.
FIG. 17 is a front view of the embodiment of FIG. 16.
FIG. 18 is a schematic diagram of a state in which the release layer is completely peeled from the protective film sheet in another implementation manner according to an embodiment of the present invention.

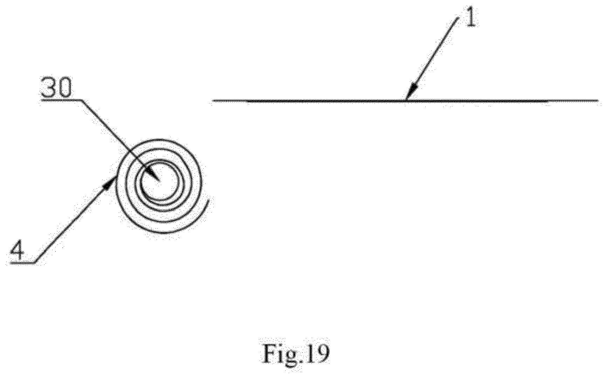

FIG. 19 is a front view of the embodiment of FIG. 18.

### Detailed description

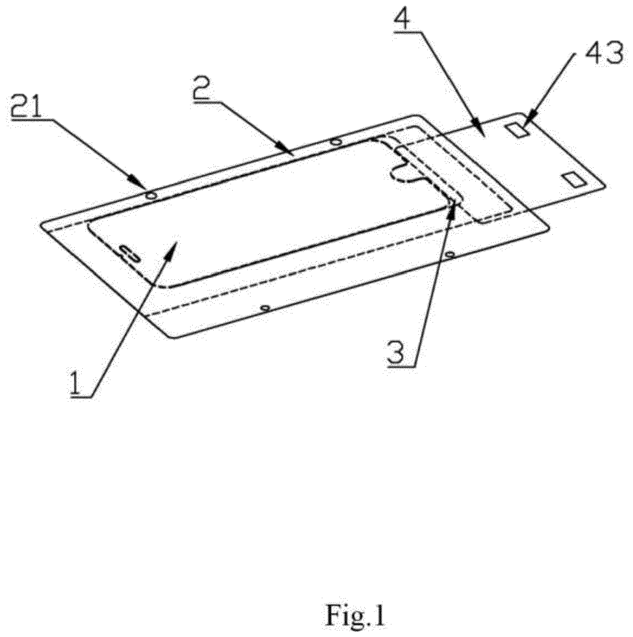

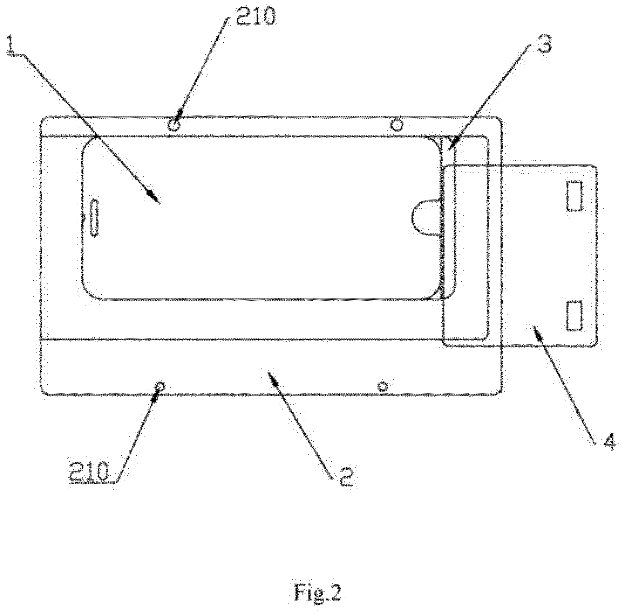

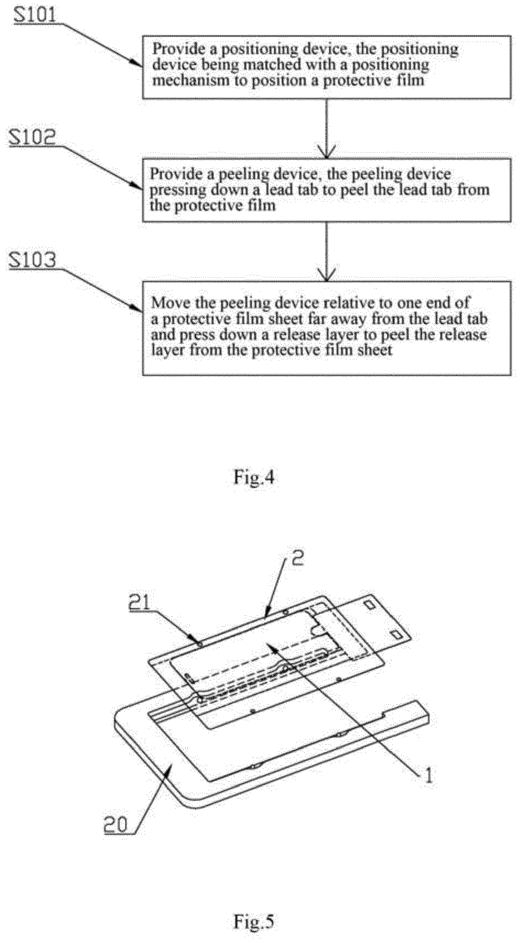

Referring to FIG. 1 and FIG. 2, a protective film according to an embodiment of the present invention includes a protective film sheet 1, a protective layer 2 and a release layer 3. The protective layer 2 is provided with a positioning mechanism 21 to align the protective film sheet 1 with a screen of an electronic device. The protective film is used in tandem with a film pasting machine, so as to ensure that the protective film sheet 1 is precisely pasted on the screen of the electronic device. As shown in FIG. 4, the positioning mechanism 21 includes a plurality of positioning holes 210 arranged at intervals along a periphery of the protective film sheet 1 for positioning the protective film 10, and the positioning holes 210 are matched with a positioning device 20 to position the protective film 10, so that the positioning is precise and stable. In the embodiment, four positioning holes 210 are provided, which meet a use requirement of a general mobile phone protective film. In addition, a lead tab 4 is connected to an end part of the release layer 3 attached to the protective film sheet 1, which facilitates driving the release layer 3 to be peeled from the protective film sheet 1 during film pasting, so that the peeling is smoother and more efficient.

In some embodiments of the present invention, the plurality of the positioning holes 210 comprise at least two diameters, and the positioning holes 210 of the two diameters are arranged in an array with each other, which facilitates distinguishing a positioning direction of the protective film 10. Preferably, the plurality of positioning holes 210 are asymmetrically arranged with each other, or are distributed in a staggered manner, thereby further ensuring that the protective film 10 is in a correct positioning direction when in use.

In some embodiments of the present invention, a boundary of the protective layer 2 is larger than a boundary of the protective film sheet 1 as a whole, which facilitates arranging the positioning holes 210 in the protective layer 2 to position the protective film 10. As another embodiment, the protective layer 2 may also be attached with a positioning layer having the positioning holes 210 to position the protective film 10.

In some embodiments of the present invention, the lead tab 4 includes a first layer 41 and a second layer 42, and one end of the release layer 3 is sandwiched between the first layer 41 and the second layer 42, so that the connection is more stable. Preferably, one end of the lead tab 4 matched with the release layer 3 is offset from the boundary of the protective film sheet 1, and the lead tab 4 and the release layer 3 do not coincide with each other and have a small gap, which can ensure stable attachment of an area where the release layer 3 is matched with the protective film sheet 1 when the protective film 10 is not in use.

In some embodiments of the present invention, the lead tab 4 is a hard layer, which is less prone to deformation than the release layer 3. When the lead tab 4 is peeled from the protective film 10, the release layer 3 will have a bending and deformation tendency, so that the release layer 3 is peeled from the protective film sheet 1 more easily.

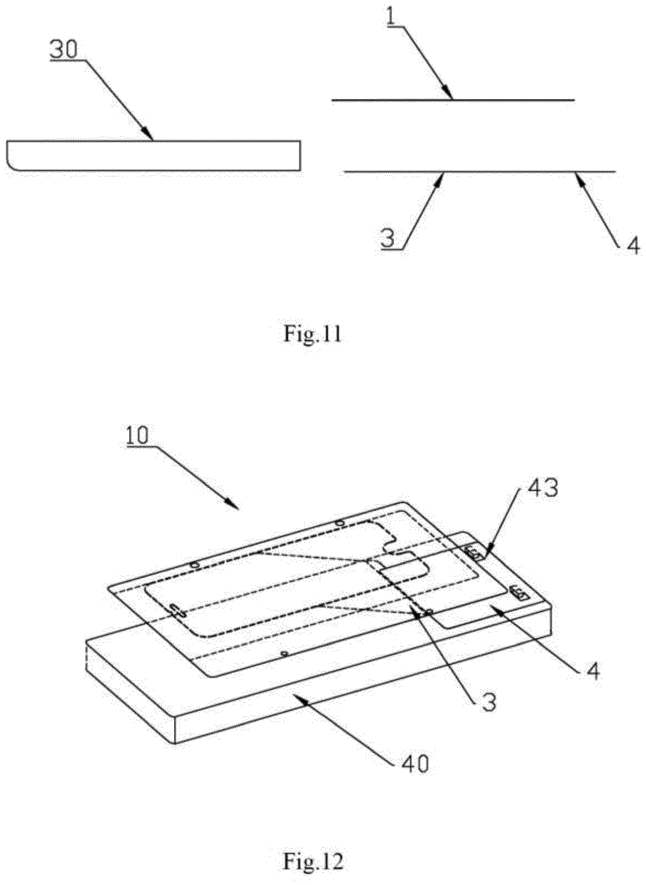

In some embodiments of the present invention, the lead tab 4 is provided with an aligning mechanism 43. As shown in FIG. 11, during a process of peeling the release layer 3, the lead tab 4 and the release layer 3 may be positioned by means of an aligning device 40 matched with the aligning mechanism 43, and the release layer 3 is collected. Preferably, the aligning mechanism 43 is arranged at one end of the lead tab 4 away from the release layer 3, and positions the lead tab 4 before the release layer 3 is peeled, thereby avoiding the release layer 3 from disengagement or bending and jumping during peeling, which affects the quality of peeling.

In some embodiments of the present invention, a dimension of the release layer 3 in a width direction is basically the same as that of the protective film sheet 1, and a dimension of the release layer in a length direction is larger than that of the protective film sheet 1. the lead tab 4 is connected to the end part of the release layer 3 attached to the protective film sheet, which facilitates driving the release layer 3 to be peeled along a length direction of the protective film sheet 1 during film pasting, so that the peeling is smoother and more efficient. In addition, the lead tab 4 may also be arranged at one end of the release layer 3 in the width direction, which facilitates peeling the release layer 3 along the width direction thereof.

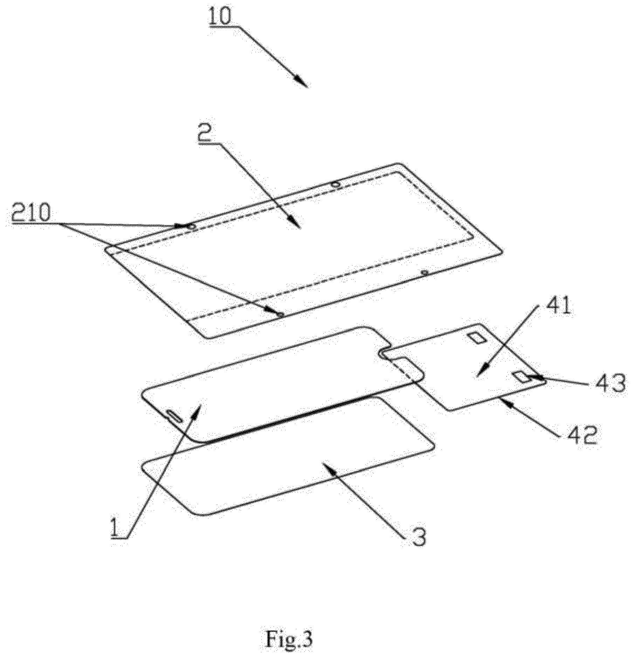

FIG. 3 shows a method for peeling a release layer of a protective film according to an embodiment of the present invention. The method includes the following steps.

In a step of S101, a positioning device 20 is provided, and the positioning device 20 is matched with a positioning mechanism 21 to position the protective film 10, as shown in FIG. 4.

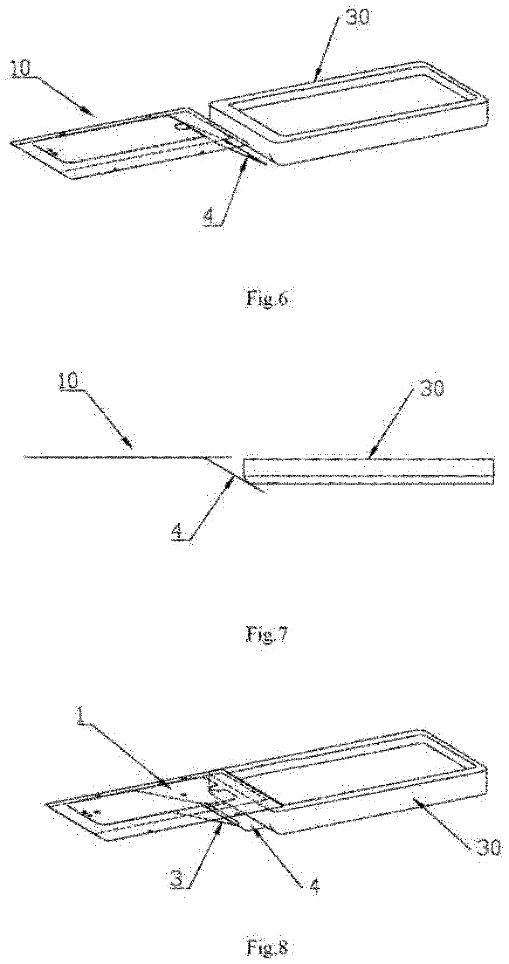

In a step of S102, a peeling device 30 is provided, the peeling device 30 presses down a lead tab 4 to peel the lead tab from the protective film 10. As shown in FIG. 5 and FIG. 6, when the lead tab 4 is peeled from the protective film 10, a release layer 3 will have a bending and deformation tendency, so that the release layer 3 is peeled from a protective film sheet 1 more easily.

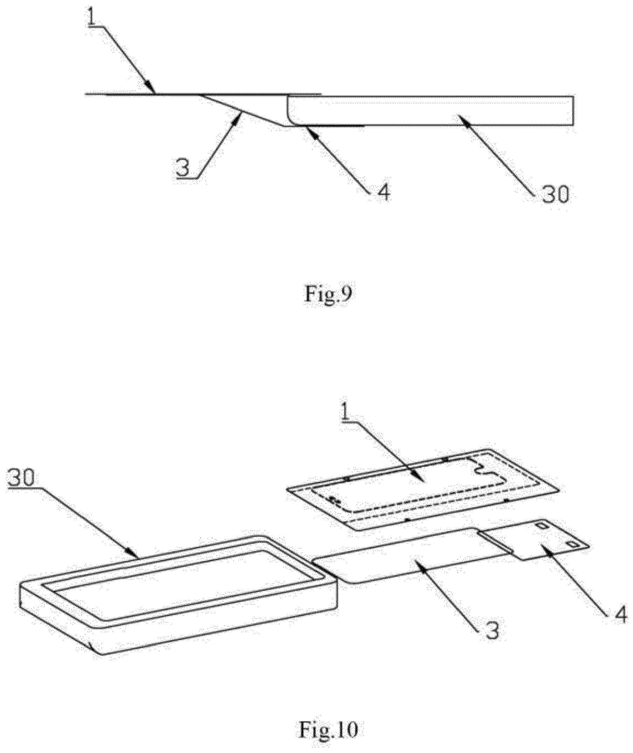

In a step of S103, a peeling device 30 moves relative to one end of the protective film sheet 1 away from the lead tab 4 and presses down the release layer 3 to peel the release layer 3 from the protective film sheet 1. As shown in FIG. 7 to FIG. 10, the peeling device 30 drives the release layer 3 to be gradually peeled from the protective film sheet 1 while moving relative to the protective film sheet 1 and pressing down. Preferably, as shown in FIG. 11, an aligning mechanism 43 maintains a matching state with an aligning device 40 during movement of the peeling device 30, and positions the lead tab 4 and the release layer 3, so as to avoid the release layer 3 from disengagement or bending and jumping during peeling, which affects the quality of peeling.

FIG. 12 shows a method for peeling a release layer of a protective film according to another embodiment of the present invention. The method includes the following steps.

In a step of S201, a positioning device 20 is provided, and the positioning device 20 is matched with a positioning mechanism 21 to position the protective film 10.

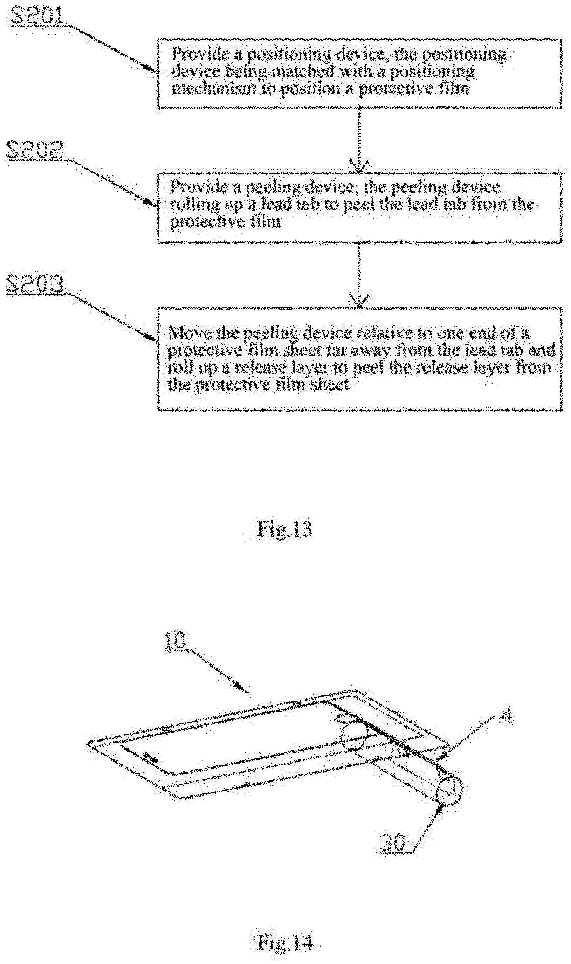

In a step of S202: a peeling device 30 is provided, and the peeling device 30 rolls up a lead tab 4 to peel the lead tab from the protective film 10. As shown in FIG. 13 and FIG. 14, the peeling device 30 is a roller, the roller and/or the lead tab 4 are adhesive, the roller and the lead tab are adhered to each other when in contact, and the roller rolls up the lead tab 4.

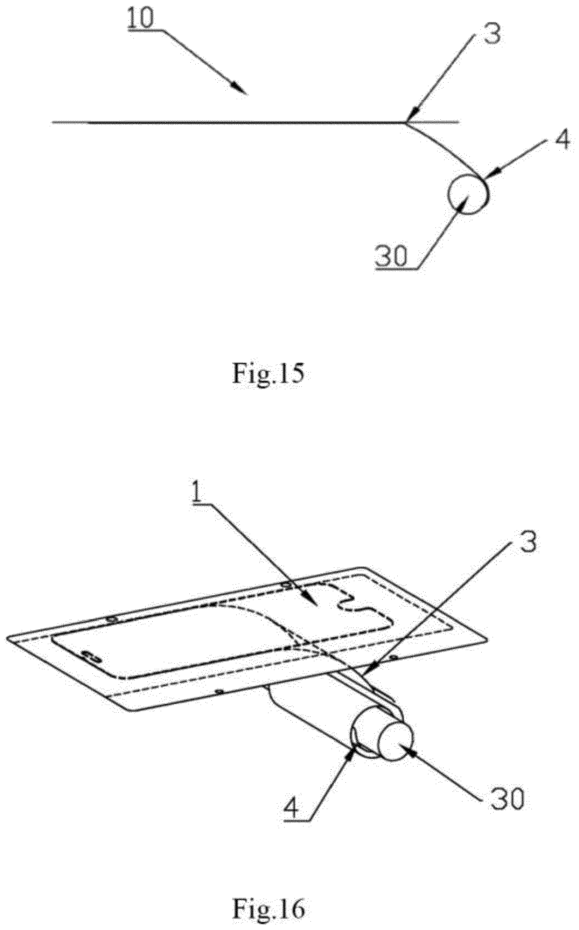

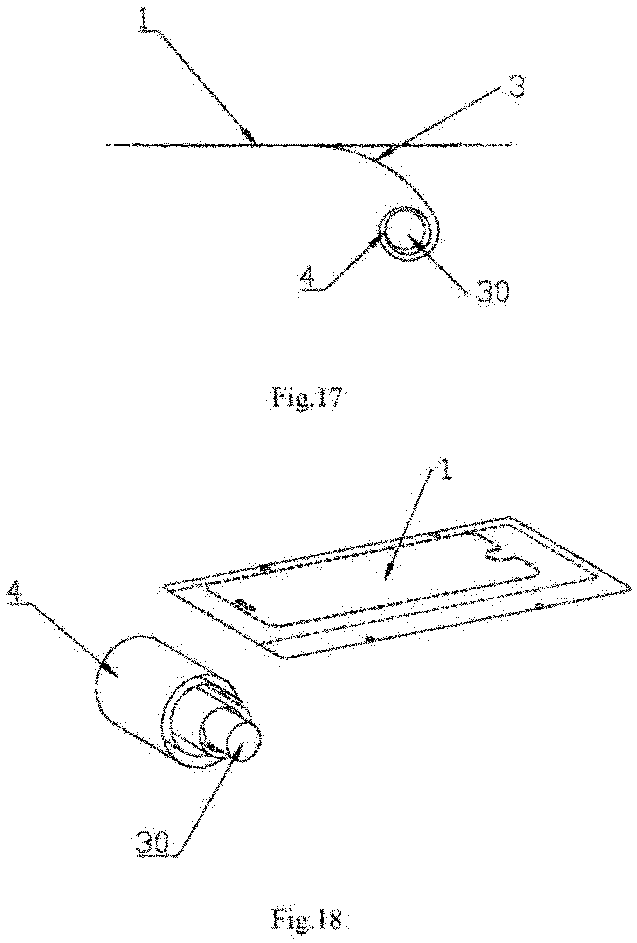

In a step of S203, a peeling device 30 moves relative to one end of a protective film sheet 1 away from the lead tab 4 and rolls up the release layer 3 to peel the release layer 3 from the protective film sheet 1. As shown in FIG. 15 to FIG. 18, the roller moves relative to the protective film sheet 1 and rolls up the release layer 3, so that the release layer 3 is gradually peeled from the protective film sheet 1.

According to the method for peeling the release layer of the protective film in the embodiment of the present invention, a process of peeling the release layer 3 is smoother and more efficient, thereby further increasing an efficiency and the quality of film pasting.

## Claims

1. A protective film (10), comprising:
a protective film sheet (1);
a protective layer (2);
a release layer (3);
the protective film sheet (1) is arranged between the protective layer (2) and the release layer (3);
a lead tab (4) connected to an end part of the release layer (3), and
a positioning mechanism (21) arranged on the protective layer (2) to align the protective film sheet (1) with a screen of an electronic device,
wherein:
the lead tab (4) comprises a first layer (41) and a second layer (42), one end of the release layer (3) is sandwiched between the first layer (41) and the second layer (42), and one end of the lead tab (4) matched with the release layer (3) is offset from a boundary of the protective film sheet (1); and
the lead tab (4) is less prone to deformation than the release layer (3) such that, when the lead tab (4) is being peeled from the protective film (10), the release layer (3) has a bending and deformation tendency, thus facilitating peeling of the release layer (3) from the protective film sheet (1).

2. The protective film (10) of claim 1, wherein an aligning mechanism (43) is arranged on the lead tab (4).

3. The protective film (10) of claim 2, wherein the aligning mechanism (43) is arranged at one end of the lead tab (4) away from the release layer (3).

4. The protective film (10) of claim 1, wherein the positioning mechanism (21) comprises a plurality of positioning holes (210) arranged at intervals along a periphery of the protective film sheet (1) for positioning the protective film (10).

5. The protective film (10) of claim 4, wherein the plurality of positioning holes (210) are asymmetrically arranged with each other.

6. The protective film (10) of claim 5, wherein the plurality of positioning holes (210) comprise at least two diameters and are arranged in an array with each other.

7. A method for peeling a release layer of a protective film, comprising:
• providing (S101) a positioning device (20), the positioning device (20) being matched with a positioning mechanism (21) to position the protective film (10);
• providing (S102) a peeling device (30), the peeling device (30) peeling a lead tab (4) from the protective film (10); and
• moving (S103) the peeling device (30) relative to the protective film (10) to peel the release layer (3) from a protective film sheet (1) of the protective film (10),
• the protective film sheet (1) being arranged between a protective layer (2) and the release layer (3), the lead tab (4) being connected to an end part of the release layer (3), and the positioning mechanism (21) being arranged on the protective layer (2) to align the protective film sheet (1) with a screen of an electronic device,
wherein:
the lead tab (4) comprises a first layer (41) and a second layer (42), one end of the release layer (3) is sandwiched between the first layer (41) and the second layer (42), and one end of the lead tab (4) matched with the release layer (3) is offset from a boundary of the protective film sheet (1); and
the lead tab (4) is less prone to deformation than the release layer (3) such that, when the lead tab (4) is being peeled from the protective film (10), the release layer (3) has a bending and deformation tendency, thus facilitating peeling of the release layer (3) from the protective film sheet (1).

8. The method of claim 7, wherein moving the peeling device (30) relative to the protective film (10) to peel the release layer (3) from the protective film sheet (1) comprises: moving the peeling device (30) relative to one end of the protective film sheet (1) away from the lead tab (4) and pressing down the release layer (3) to peel the release layer (3) from the protective film sheet (1).

9. The method of claim 7, wherein moving the peeling device (30) relative to the protective film to peel the release layer (3) from the protective film sheet (1) comprises: moving the peeling device (30) relative to one end of the protective film sheet (1) away from the lead tab (4) and rolling up the release layer (3) to peel the release layer (3) from the protective film sheet (1).

## Patentansprüche

1. Schutzfilm (10), umfassend:
eine Schutzfilmfolie (1);
eine Schutzschicht (2);
eine Ablöseschicht (3);
wobei die Schutzfilmfolie (1) zwischen der Schutzschicht (2) und der Ablöseschicht (3) angeordnet ist;
eine Leitlasche (4), welche mit einem Endteil der Ablöseschicht (3) verbunden ist, und
einen Positionierungsmechanismus (21), welcher auf der Schutzschicht (2) angeordnet ist, um die Schutzfilmfolie (1) mit einem Bildschirm einer elektronischen Vorrichtung auszurichten,
wobei:
die Leitlasche (4) eine erste Schicht (41) und eine zweite Schicht (42) umfasst, ein Ende der Ablöseschicht (3) zwischen der ersten Schicht (41) und der zweiten Schicht (42) eingelegt ist, und ein Ende der Leitlasche (4), welches mit der Ablöseschicht (3) übereinstimmt, in Bezug auf eine Grenze der Schutzfilmfolie (1) versetzt ist; und
die Leitlasche (4) weniger anfällig für die Verformung als die Ablöseschicht (3) ist, sodass, wenn die Leitlasche (4) vom Schutzfilm (10) abgelöst wird, die Ablöseschicht (3) eine Neigung zur Biegung und Verformung hat, wodurch das Ablösen der Ablöseschicht (3) von der Schutzfilmfolie (1) erleichtert wird.

2. Schutzfilm (10) nach Anspruch 1, wobei ein Ausrichtungsmechanismus (43) auf der Leitlasche (4) angeordnet ist.

3. Schutzfilm (10) nach Anspruch 2, wobei der Ausrichtungsmechanismus (43) an einem Ende der Leitlasche (4), welches entfernt von der Ablöseschicht (3) liegt, angeordnet ist.

4. Schutzfilm (10) nach Anspruch 1, wobei der Positionierungsmechanismus (21) eine Vielzahl von Positionierungslöchern (210) umfasst, welche in Abständen entlang eines Umfangs der Schutzfilmfolie (1) zum Positionieren des Schutzfilms (10) angeordnet sind.

5. Schutzfilm (10) nach Anspruch 4, wobei die Vielzahl von Positionierungslöchern (210) asymmetrisch miteinander angeordnet sind.

6. Schutzfilm (10) nach Anspruch 5, wobei die Vielzahl von Positionierungslöchern (210) mindestens zwei Durchmesser umfassen und in einer Aufstellung miteinander angeordnet sind.

7. Verfahren zum Ablösen einer Ablöseschicht eines Schutzfilms, umfassend:
• das Bereitstellen (S101) einer Positionierungsvorrichtung (20), wobei die Positionierungsvorrichtung (20) auf einen Positionierungsmechanismus (21) abgestimmt ist, um den Schutzfilm (10) zu positionieren;
• das Bereitstellen (S102) einer Ablösevorrichtung (30), wobei die Ablösevorrichtung (30) eine Leitlasche (4) vom Schutzfilm (10) ablöst; und
• das Bewegen (S103) der Ablösevorrichtung (30) bezüglich des Schutzfilms (10), um die Ablöseschicht (3) von einer Schutzfilmfolie (1) des Schutzfilms (10) abzulösen,
• wobei die Schutzfilmfolie (1) zwischen einer Schutzschicht (2) und der Ablöseschicht (3) angeordnet ist, wobei die Leitlasche (4) mit einem Endteil der Ablöseschicht (3) verbunden ist, und wobei der Positionierungsmechanismus (21) auf der Schutzschicht (2) angeordnet ist, um die Schutzfilmfolie (1) mit einem Bildschirm einer elektronischen Vorrichtung auszurichten,
wobei:
die Leitlasche (4) eine erste Schicht (41) und eine zweite Schicht (42) umfasst, ein Ende der Ablöseschicht (3) zwischen der ersten Schicht (41) und der zweiten Schicht (42) eingelegt ist, und ein Ende der Leitlasche (4), welches mit der Ablöseschicht (3) übereinstimmt, in Bezug auf eine Grenze der Schutzfilmfolie (1) versetzt ist; und
die Leitlasche (4) weniger anfällig für die Verformung als die Ablöseschicht (3) ist, sodass, wenn die Leitlasche (4) vom Schutzfilm (10) abgelöst wird, die Ablöseschicht (3) eine Neigung zur Biegung und Verformung hat, wodurch das Ablösen der Ablöseschicht (3) von der Schutzfilmfolie (1) erleichtert wird.

8. Verfahren nach Anspruch 7, wobei das Bewegen der Ablösevorrichtung (30) bezüglich des Schutzfilms (10), um die Ablöseschicht (3) von der Schutzfilmfolie (1) abzulösen, Folgendes umfasst: das Bewegen der Ablösevorrichtung (30) bezüglich eines Endes der Schutzfilmfolie (1), welches entfernt von der Leitlasche (4) liegt, und das Herunterdrücken der Ablöseschicht (3), um die Ablöseschicht (3) von der Schutzfilmfolie (1) abzulösen.

9. Verfahren nach Anspruch 7, wobei das Bewegen der Ablösevorrichtung (30) bezüglich des Schutzfilms, um die Ablöseschicht (3) von der Schutzfilmfolie (1) abzulösen, Folgendes umfasst: das Bewegen der Ablösevorrichtung (30) bezüglich eines Endes der Schutzfilmfolie (1), welches entfernt von der Leitlasche (4) liegt, und das Aufrollen der Ablöseschicht (3), um die Ablöseschicht (3) von der Schutzfilmfolie (1) abzulösen.

## Revendications

1. Un film protecteur (10) comportant :
une feuille de film protecteur (1) ;
une couche protectrice (2) ;
une couche détachable (3) ;
la feuille de film protecteur (1) est aménagée entre la couche protectrice (2) et la couche détachable (3) ;
une languette principale (4) reliée à une partie d'extrémité de la couche détachable (3), et
un mécanisme de positionnement (21) aménagé sur la couche protectrice (2) pour aligner la feuille de film protecteur (1) ayant un écran d'un dispositif électronique,
dans lequel :
la languette principale (4) comporte une première couche (41) et une deuxième couche (42), une extrémité de la couche détachable (3) est prise en sandwich entre la première couche (41) et la deuxième couche (42), et une extrémité de la languette principale (4) appariée avec la couche détachable (3) est décalée d'une limite de la feuille de film protecteur (1) ; et
la languette principale (4) est moins susceptible de déformation que la couche détachable (3) de sorte que, lorsque la languette principale (4) est décollée du film protecteur (10), la couche détachable (3) a tendance à se courber et se déformer, en rendant ainsi facile le décollage de la couche détachable (3) de la feuille de film protecteur (1).

2. Le film protecteur (10) de la revendication 1, dans lequel un mécanisme d'alignement (43) est aménagé sur la languette principale (4).

3. Le film protecteur (10) de la revendication 2, dans lequel le mécanisme d'alignement (43) est aménagé à une extrémité de la languette principale (4) éloignée de la couche détachable (3).

4. Le film protecteur (10) de la revendication 1, dans lequel le mécanisme de positionnement (21) comporte une pluralité de trous de positionnement (210) aménagés à des intervalles le long d'une périphérie de la feuille de film protecteur (1) pour positionner le film protecteur (10).

5. Le film protecteur (10) de la revendication 4, dans lequel la pluralité de trous de positionnement (210) sont aménagés de façon asymétrique entre eux.

6. Le film protecteur (10) de la revendication 5, dans lequel la pluralité de trous de positionnement (210) comportent au moins deux diamètres et sont aménagés en un réseau entre eux.

7. Une méthode pour décoller une couche détachable d'un film protecteur, comportant :
• offrir (S101) un dispositif de positionnement (20), le dispositif de positionnement (20) étant apparié à un mécanisme de positionnement (21) pour positionner le film protecteur (10) ;
• offrir (S102) un dispositif de décollage (30), le dispositif de décollage (30) décollant une languette principale (4) du film protecteur (10) ; et
• déplacer (S103) le dispositif de décollage (30) par rapport au film protecteur (10) pour décoller la couche détachable (3) d'une feuille de film protecteur (1) du film protecteur (10),
• la feuille de film protecteur (1) étant aménagée entre une couche protectrice (2) et la couche détachable (3), la languette principale (4) étant reliée à une partie d'extrémité de la couche détachable (3) et le mécanisme de positionnement (21) étant aménagé sur la couche protectrice (2) pour aligner la feuille de film protecteur (1) avec un écran d'un dispositif électronique,
dans lequel :
la languette principale (4) comporte une première couche (41) et une deuxième couche (42), une extrémité de la couche détachable (3) est prise en sandwich entre la première couche (41) et la deuxième couche (42), et une extrémité de la languette principale (4) appariée avec la couche détachable (3) est décalée d'une limite de la feuille de film protecteur (1) ; et
la languette principale (4) est moins susceptible de déformation que la couche détachable (3) de sorte que, lorsque la languette principale (4) est décollée du film protecteur (10), la couche détachable (3) a tendance à se courber et se déformer, en rendant ainsi facile le décollage de la couche détachable (3) de la feuille de film protecteur (1).

8. La méthode de la revendication 7, dans laquelle déplacer le dispositif de décollage (30) par rapport au film protecteur (10) pour décoller la couche détachable (3) d'une feuille de film protecteur (1) comporte : déplacer le dispositif de décollage (30) par rapport à une extrémité de la feuille de film protecteur (1) loin de la languette principale (4) et appuyer sur la couche détachable (3) pour décoller la couche détachable (3) de la feuille de film protecteur (1).

9. La méthode de la revendication 7, dans laquelle déplacer le dispositif de décollage (30) par rapport au film protecteur pour décoller la couche détachable (3) de la feuille de film protecteur (1) comporte : déplacer le dispositif de décollage (30) par rapport à une extrémité de la feuille de film protecteur (1) loin de la languette principale (4) et enrouler la couche détachable (3) pour décoller la couche détachable (3) de la feuille de film protecteur (1).
